# EUROPEAN PATENT APPLICATION

(11) **EP 1 873 782 A1**
(43) Date of publication of application: **02.01.2008**
(21) Application number: 06255886.1
(22) Date of filing: 17.11.2006
(51) Int. Cl.: G11B 27/034, H04N 5/76

(54) **Method of managing storage of broadcast program and television receiver using the same**

(30) Priority: 27.06.2006 KR 20060057907
(71) Applicant: LG Electronics Inc., Yongdungpo-gu Seoul (KR)
(72) Inventor: Kim, Yong Chul, Seo-gu, Gwangju (KR)
(74) Representative: Cabinet Plasseraud

(57) **Abstract**

A method of managing the storage of a broadcast program in a television receiver having a personal video recorder enables a more efficient use of the storage capacity of a personal video recorder (PVR) provided to the television receiver. The method includes steps of registering the stored broadcast program for automatic storage updating; extracting information for a newly received broadcast program; first determining whether the stored broadcast program is a broadcast program of a category corresponding to the newly received broadcast program, by comparing the extracted information to information of the stored broadcast program; and recording the newly received broadcast program in the personal video recorder according to the first determining and a second determination of whether a storage deletion condition is met for the stored broadcast program. Therefore, if prior storage of a same-category program is detected after a playback of the stored program, the storage of a newly received program of the corresponding category is performed by executing an updating operation to cause an automatic deletion of the previously stored program according to a predetermined storage deletion condition.

## Description

The present invention relates to television receivers. It more particularly relates to a method of managing the storage of a broadcast program and a television receiver using the same.

A typical contemporary personal video recorder (PVR) is capable of storing large amounts of video and audio data on a hard disc drive having a storage capacity of 10-100 gigabytes. A PVR may be used in conjunction with a television receiver so that a received broadcast signal, including video, audio, and additional data streams, may be recorded for subsequent (time-shifted) playback and viewing. The received broadcast programs are stored in the hard disc drive in a manner similar to the storage of data files in a personal computer. Meanwhile, such PVRs are typically provided with a programming function enabling a reserved recording operation for recording a specific or scheduled broadcast program according to a user selection.

In efficiently managing the available storage capacity of a PVR as described above, the user may wish to delete one or more previously stored broadcast programs (files) to free up storage space and allow for additional recording. In the contemporary art, this deletion must be performed manually for each stored program; otherwise, since the programs are stored permanently for unlimited retrieval and use, there can be no storage of additional programs beyond the PVR's maximum capacity.

In many instances of ordinary PVR usage, however, a program that is regularly or periodically broadcast, such as an evening news program, is viewed only once after its initial storage, so that there is often no need for permanent storage or unlimited retrieval. In this case, the user is forced to search the memory and delete each unwanted file (stored program). In other words, in the contemporary art, the storage of unnecessary data can preclude the storage of necessary data, by placing an arbitrary limit on the storage capacity.

Accordingly, the present invention is directed to an improved broadcast program storage management method and a television receiver using the same.

Embodiments of the present invention can provide a method of managing the storage of a broadcast program and a television receiver using the same, by which a storage capacity of a PVR can be effectively managed.

Embodiments of the present invention can provide a method of managing the storage of a broadcast program and a television receiver using the same, which promotes efficient use of a storage capacity of a PVR.

Additional advantages and features of the invention will be set forth in part in the description which follows and in part will become apparent to those having ordinary skill in the art upon examination of the following or may be learned from practice of the invention. The advantages of the invention may be realized and attained by the structure particularly pointed out in the written description and claims hereof as well as the appended drawings.

In accordance with a first aspect of the invention there is provided a method of controlling a television receiver having a personal video recorder for storing a broadcast program. The method comprises registering the stored broadcast program for automatic storage updating; extracting information for a newly received broadcast program; first determining whether the stored broadcast program is a broadcast program of a category corresponding to the newly received broadcast program, by comparing the extracted information to information of the stored broadcast program; and recording the newly received broadcast program in the personal video recorder according to the first determining and a second determination of whether a storage deletion condition is met for the stored broadcast program.

According to another aspect of the present invention, there is provided a television receiver having a personal video recorder arranged to store a broadcast program. The television receiver comprises a memory arranged to store information for the stored broadcast program according to a user selection, to register the stored broadcast program for automatic storage updating; a broadcast information extractor arranged to extract information for a newly received broadcast program; and a system controller arranged to first determine whether the stored broadcast program is a broadcast program of a category corresponding to the newly received broadcast program, by comparing the extracted information to information of the stored broadcast program, and to record the newly received broadcast program in the personal video recorder according to the first determining and a second determination of whether a storage deletion condition is met for the stored broadcast program.

According to embodiments of the present invention, if there exists a played broadcast program having a same category in a television receiver in storing a currently received broadcast program, storage of the corresponding broadcast program is updated by deleting the previously stored broadcast program according to a predetermined storage delete condition and then storing the newly received broadcast program. Therefore, the internal storage space of the television receiver can be efficiently used.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:

FIG. 1 is a block diagram of a television receiver having a PVR for storing and playing back a received broadcast program according to the present invention;

FIG. 2 is a flowchart of a method of managing the storage of a broadcast program according to the present invention;

FIG. 3 is a flowchart illustrating the playing back of a broadcast program stored according to the method of the present invention; and

FIG. 4 is a flowchart illustrating a conditional deletion of a broadcast program stored according to the method of the present invention.

Wherever possible, like reference designations will be used throughout the drawings to refer to the same or similar parts.

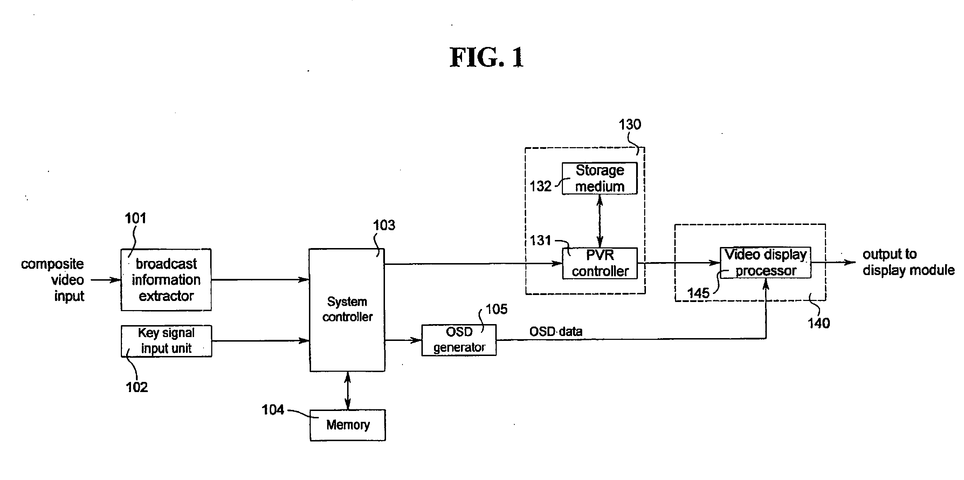

Referring to FIG. 1, which illustrates a television receiver provided with a personal video recorder (PVR) capable of storage (recording) and playback of a broadcast program, a PVR 130 comprises a PVR controller 131 for determining whether to store a specific broadcast program, whether to play a previously stored broadcast program, and whether to delete a stored broadcast program in response to control signals from a system controller 103 for controlling the television receiver system and comprises a storage medium 132 for storing a broadcast program under control of the PVR controller. The system controller 103 is provided with a memory 104 for storing broadcast program information including program reproduction status and information input by a user via a key signal input unit 102 and for automatically updating the stored information. The key signal input unit 102 is a user interface such as a local keypad or remote controller of the television receiver and performs a function of inputting to the system controller 103 various commands or information according to a user selection. The television receiver according to the present embodiment includes an on-screen display (OSD) generator 138 for generating an OSD data signal under control of the system controller 103 and an audio/video processor 140 including a video display processor 145 for processing a video signal output from the PVR controller while superposing OSD data generated from the OSD generator.

According to the present embodiment, the system controller 103 generates a control signal to update the respective storage and playback operations of each incoming broadcast program, i.e., the composite video signal of a received broadcast program, by comparing the information of the broadcast programs stored in the memory 104 with information of received broadcast programs, to determine via the PVR controller 131 whether a previously stored broadcast program having the same category of the received broadcast program exists within the storage medium 132. In particular, if it is first determined that a broadcast program having the same category exists (i.e., was previously stored) in the storage medium 132, the system controller 103 deletes (erases) the previously stored broadcast program when conditions for its deletion are met according to a second determination, thereby enabling storage of a corresponding newly received program.

These storage deletion conditions are pre-stored in the memory 104 by the user, for example, according to a series of broadcast programs (installments) containing identifying information, such as a category, genre, title, or installment identifier, corresponding to a currently received broadcast program or according to a playback count of the stored broadcast program, which may include a playback count of a specific installment.

The television receiver according to the present embodiment includes a broadcast information extractor 101 for extracting broadcast information from a digital broadcast signal, namely, the composite video signal of a received broadcast program. The broadcast information extractor 101 extracts information for the received broadcast program and provides the extracted information to the system controller 103. Here, the broadcast information extractor 101 uses additional data included in a received broadcast signal, to extract at least one of the title of the corresponding broadcast program and its time of reception, which may include one or more indications of date, time, and day of the week. The extracted information is then provided to the system controller 103. The system controller 103 compares the extracted information of a currently received broadcast program to the corresponding information (e.g., title, time, etc.) for a broadcast program as stored in the memory 104. If the extracted information matches the stored information, the system controller 103 checks whether a broadcast program of the same category of the currently received broadcast program has been previously stored in the storage medium 132 and whether a storage deletion condition of the previously stored broadcast program is met. The system controller 103 then provides the received broadcast program to the PVR controller 131 to store the received broadcast program.

The PVR controller 131 is provided with the audio, video, and data streams of the digital broadcast signal under control of the system controller 103 and stores the provided streams in the storage medium 132, which comprises a hard disc and hard disc drive. At the same time, the PVR controller 131 may, as in the present embodiment, perform MPEG encoding on the incoming data of an analog broadcast signal, to be stored in the storage medium 132. The PVR controller 131 determines whether a specific broadcast program is currently present (i.e., has been previously stored) in the storage medium 132, determines a playback count of the previously stored broadcast program, and provides the results to the system controller 103.

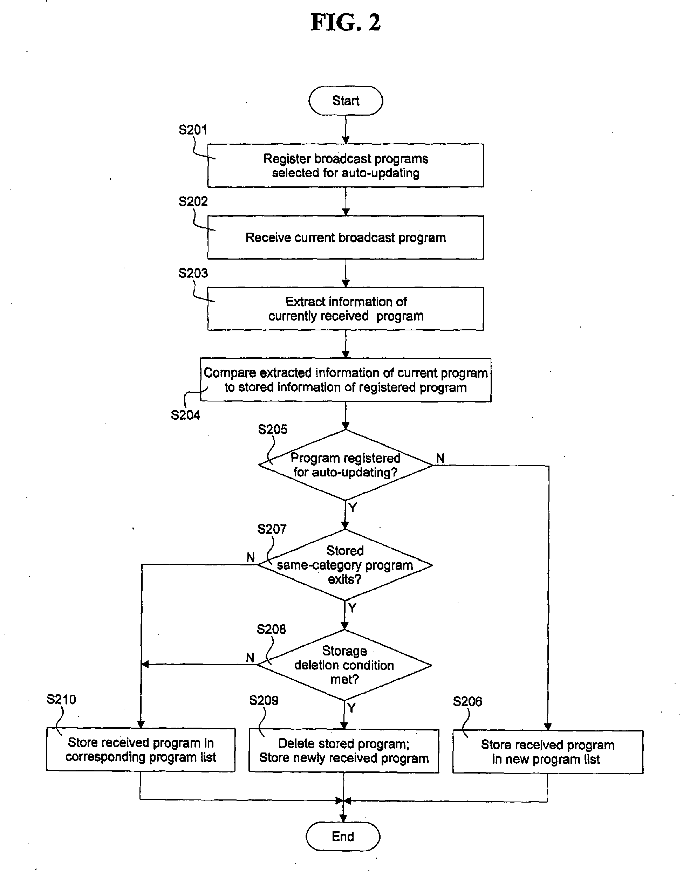

Referring to FIG. 2, a user inputs via the user interface (key signal input unit 102) information for a selected broadcast program to be automatically updated, whereby the system controller 103 stores the input information in the memory 104 and thus registers the broadcast program for automatic updating (S201). Thereafter, upon reception of a broadcast program, the received broadcast program is provided to the broadcast information extractor 101 (S202). Using additional data included in a received broadcast program, the broadcast information extractor 101 extracts information about the received broadcast program, i.e., at least one of a corresponding title and the reception time, and outputs the extracted information to the system controller 103 (S203). The system controller 103 compares the extracted information with the information stored in the memory 104 by the user, to determine whether the broadcast program is one that has been registered for automatic updating (S204).

For instance, the registered broadcast program may be a specific "Nightly News" program that is broadcast at a predetermined time every day, say, at 9:00 PM, and the registration information is stored in the memory 104. Then, the broadcast information extractor 101 extracts title/time information included in additional data of a currently received broadcast program and provides the extracted information to the system controller 103. The system controller 103 compares the extracted information with the corresponding information, e.g., the title ("Nightly News") and/or the time (9:00 PM), stored in the memory 104.

The system controller 103 determines based on the above comparison result whether the currently received broadcast program is a broadcast program registered for automatic updating (S205). If not, the system controller 103 controls the PVR 130 to record (store) the currently received broadcast program as part of a new broadcast program list (S206). On the other hand, if it is determined that the received broadcast program corresponds with the registered broadcast program, the system controller 103 determines whether there is a broadcast program of the same category (e.g., corresponding to a nightly news program) already stored in the storage medium 132 of the PVR 130, and if so, checks the memory 104 to determine whether the stored same-category broadcast program meets a storage deletion condition set by the user (S207, S208). If it is confirmed by the PVR controller 131 that a stored broadcast program meets the storage deletion condition, the system controller 103 records (stores) the currently received broadcast program in the storage medium 132 while deleting the previously stored broadcast program, thus "updating" the stored broadcast program (S209). If it is determined in steps S207 and S208 that there has been no same-category broadcast program stored in the storage medium 132 or that a stored same-category broadcast program exists but that the set storage deletion condition has not been met, the system controller 103 does not update the currently received broadcast program using the previously broadcast program and separately records (stores) the currently received broadcast program within a corresponding broadcast program list (5210).

In doing so, the auto-updating function may be applied to programs that are regularly or periodically broadcast and stored for time-shifted viewing but are unlikely to be viewed (replayed) more than once, such as a nightly news program. Therefore, if such a program is reproduced at least once or if a corresponding (same category) program is newly received, the previously stored program is replaced by the newly received program, so that the storage of a broadcast program of the same category can be updated automatically, to enable more efficient use of available storage.

According to the present embodiment, information for setting the storage deletion condition includes a maximum playback count, whereby there may be accommodation for a prescribed number of installments (e.g., episodes) corresponding to a series of programs to be stored in the storage medium 132: however, this is not essential to the invention in its broadest aspect. If such information is stored in the system memory 103 as part of the storage deletion condition, the system controller 103 may delete earlier installments, for example, beginning from the earliest stored installment. In other words, the automatic update is performed by replacing older programs with newer programs. For instance, if a user applies a playback count function to set a storage deletion condition for storing three consecutive broadcasts of the "Nightly News" program (e.g., on Monday, Tuesday, and Wednesday), three program installments are stored in the storage medium 132. Thereafter, upon receipt of the next installment (e.g., on Thursday), the system controller 103 controls the PVR 130 to delete the earliest stored (e.g., Monday) installment when storing the most recently received (e.g., Thursday) installment. Accordingly, the three consecutive installments that remain stored in the storage medium 132 are the most recent installments, namely, the Tuesday, Wednesday, and Thursday installments. At the same time, a user may have a special in a particular installment, in which case the user may set an update lock for the broadcast of the particular (e.g., Monday) installment, whereby the system controller 103 controls the PVR 130 to delete following (e.g., Tuesday) installment instead of the earliest installment.

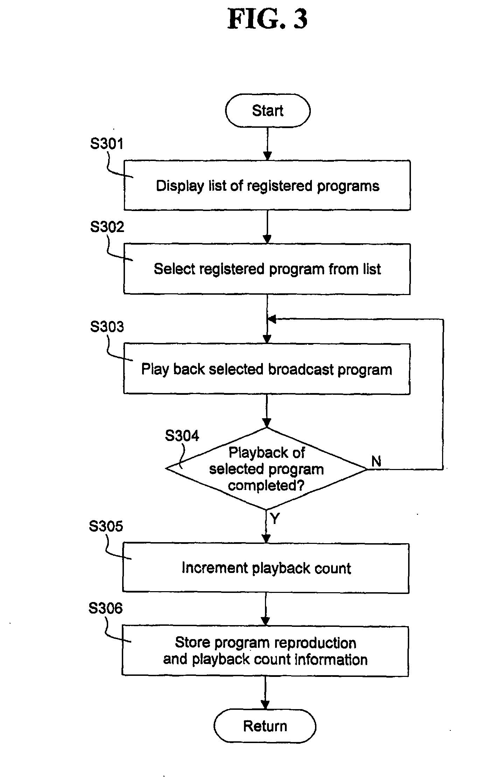

FIG. 3 illustrates a process of playing back a broadcast program stored according to the method of FIG. 2, to obtain a playback count for updating program reproduction information of a registered program. Here, the user first selects, via an OSD menu and the key signal input unit 102, a list of broadcast programs stored for automatic playback updating, i.e., registered programs, and the selected list is displayed (S301). The user selects from the displayed list a specific program for reproduction (S302). In response to the above user selection, the system controller 103 controls the PVR 130 to playback the selected program (S303). Upon determining completion of a playback operation (S304), the system controller 103 increments the playback count and stores in the memory 104 program reproduction information as well as the playback count (S305, S306). The program reproduction information is determined by the PVR controller 131 and indicates that a selected program is a registered program that has been played back. It should be appreciated that incrementation of the playback count may be achieved before or after storing the corresponding information in the step S306.

According to the present embodiment, after registering a broadcast program for automatic playback updating, the storage deletion condition may be met in any convenient manner, e.g. by a predetermined playback count being reached or simply by determining that any prior playback has been performed. Therefore, when a playback of a registered program for reproduction has been completed, the program reproduction and playback count are stored accordingly; that is, the system controller 103 stores within the memory 104 information indicating that the selected broadcast program is the played broadcast program and stores the playback count of the selected broadcast program. Subsequently, when a registered program of the same-category is newly received, the PVR controller 131 determines whether there is a command signal from the system controller 103 requesting storage of the newly received same-category program. If so, the PVR controller 131 records the corresponding program by deleting the previously stored same-category program according to a predetermined storage deletion condition, for example, if it is determined that there has been any prior playback or that a specified playback count has been reached or exceeded, thereby enabling the newly received program to effectively replace the deleted program in storage.

For instance, it may be assumed that "Nightly News" is registered for automatic playback updating and that its storage deletion condition depends on whether playback has occurred, i.e., its program reproduction status. If an installment of "Nightly News" is stored within the storage medium 132 by the PVR controller 131 and a list of the stored broadcast programs is displayed according to the OSD data output from the OSD generator 138, the stored program is played back (viewed) in response to a user selection from the displayed list. Upon completion of the playback, the system controller 103 stores information on program reproduction status, which indicates that the specific "Nightly News" installment is a played broadcast program, and stores a playback count indicating how many times (e.g., once) the specific "Nightly News" installment has been played back. Here, the stored information, i.e., program reproduction status and playback count, is stored within the memory 104 under the control of the system controller 103.

On the other hand, in the event that there is no new reception of a same-category program, the PVR 130 retains the previously stored same-category program in the storage medium 132 - despite any prior playback and despite its playback count - until a further reception necessitates such deletion, namely, until newly receiving a same-category program.

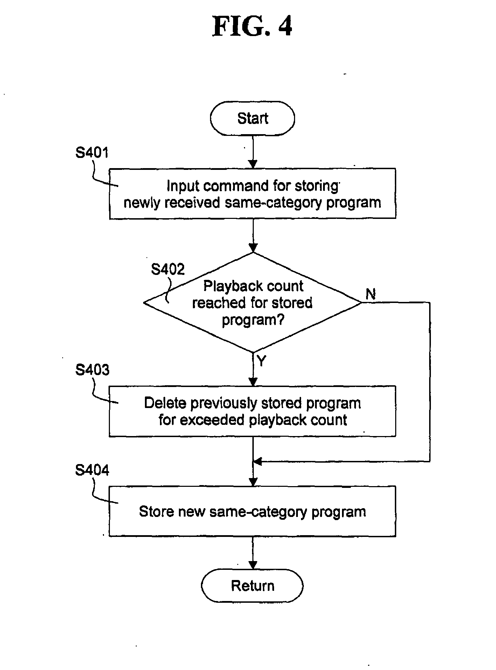

Subsequently, as shown in FIG. 4, among broadcast programs registered for automatic updating, broadcast programs having been played back are processed according to the present invention. Here, when a same-category broadcast program is newly received, say, via a tuner (not shown), and a corresponding composite video signal is input to the system controller 103, the PVR controller 131 determines whether the system controller 103 makes a request for storing the newly received broadcast program, which may be a new (or next) installment of the "Nightly News" program. If a command for storing the newly received same-category program is input, the previously stored installment having been played back is deleted according to a predetermined storage deletion condition (e.g., playback count) so that the newly received installment may be stored in its place. Meanwhile, if the newly received broadcast program belongs to another category, the PVR 130 retains the previously played broadcast program within the storage medium 132 until receiving a new broadcast program having the same category.

Referring to FIG. 4, first, a command for storing the newly received same-category program is input (S401). Thereafter, the stored broadcast program is deleted after completion of the corresponding playback according to the playback count stored within the memory 104 (S402, S403). In this case, a newly received broadcast program may be stored within an area of the storage medium 132 made available by erasing (deleting) the played broadcast program. However, if the stored broadcast program has been played back fewer times than the preset playback count, the newly received same-category broadcast program is stored within the storage medium 132 together with the previously stored broadcast program (S404).

According to the present embodiment, the storage deletion condition may be preset in various ways, for example, based on whether or not playback has occurred or based on whether a preset playback count has been reached. The playback count may be set to correlate to the number of previously received and stored installments or the number of previously stored and viewed (reproduced) installments.

By adopting the present invention, storage capacity can be used more efficiently since, in the event that a previously stored and played (reproduced) broadcast program of the same category exists for a broadcast program periodically received and stored within a television receiver, reproduction information on the previously stored broadcast program is automatically updated and stored, so that a newly received broadcast program can be stored accordingly. Automatic playback updating is not performed on a previously stored broadcast program that has not yet been played back, even if the stored broadcast program is a same-category program. Also, even if a broadcast program has already been played back, its storage is retained until reception of a new broadcast program having the same category. Hence, management of stored broadcast programs is more efficient.

It will be apparent to those skilled in the art that various modifications can be made in the present invention without departing from the scope of the invention. Thus, it is intended that the present invention covers such modifications provided they come within the scope of the appended claims.

## Claims

1. A method of controlling a television receiver having a personal video recorder for storing a broadcast program, the method comprising:
registering the stored broadcast program for automatic storage updating;
extracting information for a newly received broadcast program;
first determining whether the stored broadcast program is a broadcast program of a category corresponding to the newly received broadcast program, by comparing the extracted information to information of the stored broadcast program; and
recording the newly received broadcast program in the personal video recorder according to said first determining and a second determination of whether a storage deletion condition is met for the stored broadcast program.

2. The method of claim 1, wherein said registering is performed by storing information for the stored broadcast program in memory according to a user selection.

3. The method of claim 2, wherein the stored information is at least one of a title of the stored broadcast program and time of reception of the stored broadcast program.

4. The method of claim 3, wherein the reception time comprises at least one indication of date, time, and day of the week.

5. The method of any preceding claim, wherein the extracted information is obtained from additional data included in the newly received broadcast program.

6. The method of claim 5, wherein the extracted information is at least one of a title of the stored broadcast program and time of reception of the stored broadcast program.

7. The method of claim 6, wherein the reception time comprises at least one indication of date, time, and day of the week.

8. The method of any preceding claim, wherein the second determination is performed only if said first determination determines that the stored broadcast program is a same-category broadcast program.

9. The method of claim 8, wherein, if the second determination determines that the storage deletion condition is not met for the stored broadcast program, said recording is performed by recording the currently received broadcast program while retaining the stored broadcast program.

10. The method of claim 8, wherein, if the second determination determines that the storage deletion condition is met for the stored broadcast program, said recording is performed by deleting the stored broadcast program.

11. The method of claim 10, wherein the newly received broadcast program is recorded in a storage space previously occupied by the stored broadcast program.

12. The method of any preceding claim, further comprising:
storing, in memory, information indicating the storage deletion condition according to a user selection.

13. The method of claim 12, wherein the second determination is based on a program reproduction status.

14. The method of claim 13, wherein the program reproduction status includes a playback count of the stored broadcast program

15. The method of claim 1, wherein the registered broadcast program is a broadcast program that is regularly received.

16. A television receiver having a personal video recorder for storing a broadcast program, the television receiver comprising:
a memory arranged to store information for the stored broadcast program according to a user selection, and to register the stored broadcast program for automatic storage updating;
a broadcast information extractor arranged to extract information for a newly received broadcast program; and
a system controller arranged to first determine whether the stored broadcast program is a broadcast program of a category corresponding to the newly received broadcast program, by comparing the extracted information to information of the stored broadcast program, and to record the newly received broadcast program in the personal video recorder according to the first determining and a second determination of whether a storage deletion condition is met for the stored broadcast program.

17. The television receiver of claim 16, wherein the stored information in said memory for broadcast program registration is at least one of a title of the stored broadcast program and time of reception of the stored broadcast program.

18. The television receiver of claim 17, wherein the reception time comprises at least one indication of date, time, and day of the week.

19. The television receiver of any one of claims 16 to 18, wherein said broadcast information extractor is arranged to obtain the extracted information from additional data included in the newly received broadcast program.

20. The television receiver of claim 19, wherein the extracted information is at least one of a title of the stored broadcast program and time of reception of the stored broadcast program.

21. The television receiver of claim 20, wherein the reception time comprises at least one indication of date, time, and day of the week.

22. The television receiver of any one of claims 16 to 21, comprising means to perform the second determination only if the first determination determines that the stored broadcast program is a same-category broadcast program.

23. The television receiver of claim 22, wherein, said system controller is arranged to record the currently received broadcast program while retaining the stored broadcast program in the personal video recorder if the second determination determines that the storage deletion condition is not met for the stored broadcast program.

24. The television receiver of claim 22, wherein, said system controller is arranged to delete the stored broadcast program from the personal video recorder if the second determination determines that the storage deletion condition is met for the stored broadcast program.

25. The television receiver of claim 16, wherein said memory is arranged to store information indicating the storage deletion condition according to a user selection.

26. The television receiver of claim 25, comprising means arranged to base the second determination on a program reproduction status.

27. The television receiver of claim 26, wherein the program reproduction status includes a playback count of the stored broadcast program
